Europäisches Patentamt

European Patent Office

Office européen des brevets

(11) Publication number: **0 055 822**
**B1**

(12) **EUROPEAN PATENT SPECIFICATION**

(45) Date of publication of patent specification: **09.04.86**

(21) Application number: **81109573.6**

(22) Date of filing: **09.11.81**

(51) Int. Cl.⁴: **C 03 B 37/025,**
**C 03 B 37/075, C 03 C 17/02,**
**G 02 B 6/18**

(54) Optical transmission line and its method of manufacture.

(30) Priority: **29.12.80 CA 367630**

(43) Date of publication of application:
**14.07.82 Bulletin 82/28**

(45) Publication of the grant of the patent:
**09.04.86 Bulletin 86/15**

(84) Designated Contracting States:
**DE FR GB NL**

(56) References cited:
**CA-A-1 029 993**
**CA-A-1 034 818**
**GB-A-2 027 224**
**GB-A-2 027 929**
**US-A-2 980 957**
**US-A-3 823 995**
**US-A-4 116 653**
**US-A-4 148 621**
**US-A-4 188 089**
**US-A-4 205 900**

The file contains technical information
submitted after the application was filed and
not included in this specification

(73) Proprietor: **NORTHERN TELECOM LIMITED**
**1600 Dorchester Boulevard West**
**Montreal Quebec H3H 1R1 (CA)**

(72) Inventor: **Abe, Koichi**
**1785 Riverside Drive Apt. 2502**
**Ottawa Ontario, K1G 3T7 (CA)**

(74) Representative: **Crawford, Andrew Birkby**
**A.A. THORNTON & CO. Northumberland House**
**303-306 High Holborn**
**London WC1V 7LE (GB)**

Courier Press, Leamington Spa, England.

## Description

This invention relates to optical fibers, and to preforms for the manufacture of optical fibers, and is particularly concerned with multimode fibers designed for telecommunication applications. The invention also relates to optical transmission lines and cables embodying a multiplicity of fibers in accordance with the invention.

Optical fibers, for example as used in telecommunications, suffer from various effects which detrimentally affect the signal, or signals, being transmitted. Amongst many detrimental effects, multimode fibers suffer from modal distortion, sometimes referred to as modal dispersion, in which the transmitted signal is distorted as a result of the differential travelling speed of the signal carried through many modes. The consequence of this effect is deterioration of bandwidth or information carrying capacity of the transmission system.

Attempts have been made to reduce modal distortion and one particular form of fiber, (referred to as a "graded index" fiber), has a light transmitting core in which the refractive index (RI) varies across the diameter of the core, being highest at the center and lowest at the outer periphery. The curve of profile of RI plotted against the radius is of approximately parabolic form.

A preform for an optical fiber is generally made by deposition of a silica glass on the inner wall of a glass tube, the deposition being made in a number of layers. A dopant is added to the deposited glass to vary the RI, and the amount of dopant is increased at a predetermined rate during the deposition process. There is produced a composite layer formed of a number of individual layers each of a different — higher — RI than the previous one.

In order to approximate as closely as possible to the optimum RI profile, a large number of individual layers, for example forty or more, are deposited. It will be appreciated that as the composite layer is formed of a plurality of individual layers, the actual RI profile is stepped. By depositing a large number of thin layers, the steps are made small and the actual RI profile becomes closer to the optimum profile.

U.S. Patent Specification No. 4205900 discloses an optical transmission line comprising a plurality of optical fiber lengths which are spliced together, whereby each optical fiber length comprises a graded index core composed of a plurality of layers of doped used silica. In this specification, graded index fiber is made in which the refractive index has a virtually continuous radial variation from the axis to the periphery. However, the achievement of a smooth profile is expensive.

It is an object of the present invention to reduce expense of producing a graded index fiber.

Accordingly the present invention provides in one aspect an optical transmission line comprising a plurality of optical fiber lengths which are spliced together, each optical fiber length having a graded index core composed of a plurality of layers of doped fused silica, the refractive index of each individual layer being substantially uniform, the refractive index of the layers increasing from the outer layer towards the center of the core, the radial profile of the refractive index of the core being of stepped form, the mean refractive index profile being near-parabolic, the transmission line characterized in that the profile departs significantly from a smooth profile, the core consisting of less than thirty layers deposited in successive deposition steps, the individual optical fiber lengths being produced from optical fiber preforms.

In a further aspect the invention provides a method of making an optical transmission line comprising forming a plurality of layers of doped fused silica on an inside wall of a fused silica tubular preform the refractive index of the layers increasing for the outer layer towards the inner layer, the refractive index profile through the deposited layers being of stepped form, the refractive index of individual layers being substantially uniform, the method further comprising mounting the tubular preform in a vertical orientation, heating the tube to collapse the tube, subsequently drawing fiber from the collapsed tube, the fiber having a correspondingly stepped refractive index core, the mean refractive index profile being near-parabolic, the method characterized by forming less than thirty layers on the preform inside wall whereby the profile departs significantly from a smooth profile, and splicing together several lengths of fiber.

The present invention resides in making a preform, and forming a fiber from such a preform, in which, although the profile of RI of the light transmitting core is approximately of parabolic form, the number of individual layers deposited is reduced, and the thickness of each layer increased, relative to the conventional values. The profile is thus a rather "coarse" or "crude" approximation to the optimum profile. The modal distortion of such a fiber can be larger than that of a conventional fiber and would therefor appear to be of lower quality. However, when a plurality of such fibers are joined end-to-end, to form a transmission line, the modal distortion value, whilst still cumulative, does not rise at quite such a rate as in a conventional fiber. Further, a fiber in accordance with the present invention has modal distortion characteristics which are less sensitive to wavelength compared to a conventional fiber having a RI profile more nearly approaching optimum.

The invention will be understood by the following description, in conjunction with the accompanying drawings, in which:

Figure 1 is a diagrammatic transverse cross-section through a preform for an optical fiber;

Figure 2 is a diagrammatic transverse cross-section through an optical fiber, to a larger scale than Figure 1;

Figure 3 illustrates the RI profile for a graded index fiber for one form of fiber;

Figure 4 illustrates the RI profile for another form of graded index fiber;

Figure 5 illustrates diagrammatically in more detail the actual RI profile, similar to that of Figure 3, of a conventional fiber;

Figure 6 illustrates diagrammatically in detail the actual RI profile of a fiber produced in accordance with the present invention;

Figure 7 illustrates diagrammatically one form of apparatus for the manufacture of a preform;

Figure 8 is a curve showing the deposition temperature profile.

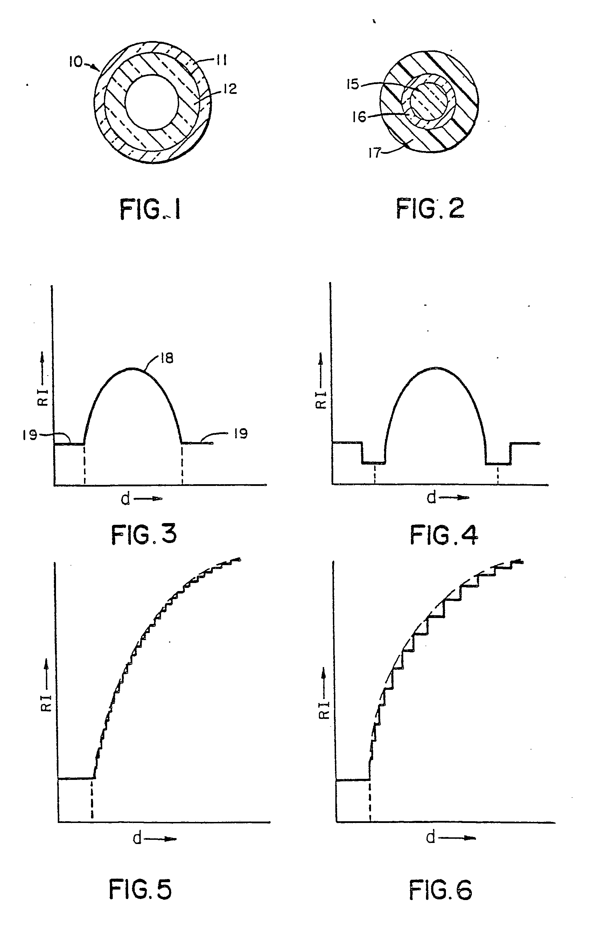

Illustrated in Figure 1, in transverse cross-section is a preform 10, of a normal conventional form, for the production of an optical fiber. Basically the preform comprises an outer tube 11, of fused silica, and an inner layer 12, of silica. The layer 12 is deposited on the inner wall of the tube 11, as is described later, the silica being doped, for example with germanium, to increase the RI. The concentration of the dopant is steadily increased during formation of the layer 12, in accordance with a predetermined programme, to give a radially varying RI, the highest RI being at the inner surface of the layer 12.

The preform is then pulled into a fiber, either by first collapsing to a solid preform and then drawing, or by collapsing and drawing at the same time. After pulling into a fiber, the fiber is coated with a plastic material for protection and ease of handling. This is seen in Figure 2, which is a transverse cross-section of a fiber, with the light, or signal transmitting core at 15 and the cladding layer at 16. The plastic coating is at 17. The core 15 is formed from the layer 12 of the preform and the cladding 16 is formed from the tube 11.

Figure 3 illustrates one RI profile for a fiber as in Figure 1. The core has a RI which is highest at the center and lowest at its outer surface, represented by the curve 18, the RI of the cladding indicated at 19.

Figure 4 illustrates the RI profile for a fiber of a slightly different form of fiber. A fiber having the RI profile of Figure 4 is formed from a perform which, for example, starts with a tube of predetermined RI and then a composite layer is deposited or formed by successive individual layers, as in Figure 1, but in this particular form, the deposited material first has a lower RI than that of the tube. Then the RI is increased by controlling the dopants i.e. two dopants, one of which decreases the RI of silica (e.g. boron) and the other which increases the RI (e.g. germanium). For the same maximum RI, a larger RI difference or higher numerical aperture is obtained.

The preform of Figure 1, and fiber of Figure 2, while exemplary of prior conventional preforms and fibers, are also exemplary of preforms and fibers in accordance with the present invention. Similarly, Figures 3 and 4 are exemplary of conventional fibers but are also exemplary of fibers in accordance with the present invention.

The difference between the preforms, and fibers, of previous conventional manufacture and preforms and fibers in accordance with the present invention, is in the form of the deposited, or formed core material, corresponding to layer 12 of Figure 1 and the core 15 of Figure 2. The difference is in what can be termed the coarseness of the RI profile. Thus, as an example, in order to approximate as closely as possible to the optimum profile, conventionally a relatively high number of individual layers are deposited, or formed, for example forty or more. Figure 5 illustrates very diagrammatically, the profile of RI, formed by approximately forty layers, giving the same number of steps. The RI does not in fact vary in a smooth curve but in a series of steps corresponding to the number of individual layers.

Figure 6 illustrates, again very diagrammatically, the RI profile as produced by the present invention. In the example shown, only fifteen individual layers have been formed, or deposited. Thus the actual profile is very "stepped", or coarse. A fiber core with a coarse, stepped, RI gradient is not as efficient with respect to modal distortion, as a fiber with a finer RI gradient, as in Figure 5. However, when lengths of fiber having the apparently less efficient core are joined together, to form a transmission line, the overall modal distortion is acceptable over the wavelengths between 700 and 1600 nm. Thus the invention is providing a preform which is easier and cheaper to make, and yet provides a transmission line having acceptable modal distortion characteristics over the operational wavelength range, contrary to expectations.

It should be noted that the optimum index profile depends upon dopants and also the wavelengths of the light sources. It has been well known that germanium, which is one of the most commonly used dopants, gives a profile which is more sensitive to wavelength compared to the profile resulting from other dopants, such as phosphorus.

Another significant feature of the modal distortion is that the pulse broadening due to the modal distortion is not linearly proportional to the link length when many fibers are spliced to form a concatenated link with, typically, a 10 km length. The deviation of the pulse broadening from a linear relationship to the link length is caused by the following two factors: (1) Mode mixing (transition of modes caused by perturbations of the fiber such as splice, bending, imperfection of the profile etc.) (2) Random deviation of the RI profile from the optimum profile, along the link length.

One of the empirical formula used to designate the length dependent pulse broadening is:

$$\Delta T = T_1 L^P \qquad (1)$$

or more conveniently,

$$\log (\Delta T) = T_1 + P.\log L. \qquad (2)$$

where, T is the pulse broadening (ns) of the link with the length of L (Km), $T_1$ is determined experimentally as the intersection of the least square fitted line at L = 1 Km using the formula

(2), P is the parameter designating the length dependence. Numerous measurements have been made and fitted to the formula (2) giving $T_1$ and P values. It was found the $T_1$ was approximately equal to the averaged pulse broadening (ns/Km) of individual fibers if all the fibers had the same length of nearly 1 Km and also that the typical P values were between 0.6 and 0.8. For systems requirements, which are given as the pulse broadening for the repeater spacing, which may vary between 8 and 20 Km, appropriate fiber quality (pulse broadening) has to be determined taking into account the P value. It will be clear that low quality fibers (large $T_1$ or large averaged pulse broadening) with a low P value are equivalent to high quality fibers (small $T_1$ or small averaged pulse broadening) with a high P value. Furthermore, as the system may be operated at various wavelengths, then the system requirement at each wavelength has to be met taking into account the $T_1$ and P values at each wavelength.

Furthermore, as stated above, the fiber with the "crude" index profile has modal distortion characteristics which are less sensitive to the wavelength compared to the conventional fiber. It should be noted that germanium has been considered as the dopant to control the RI for conventional fibers and for the present invention. As pointed out previously, the modal distortion is a sensitive function of the index profile if the RI is controlled by using germanium. This property of fibers made by using the current invention has advantages over the conventional fibers when the installed cables are intended to be used at different wavelengths in the future.

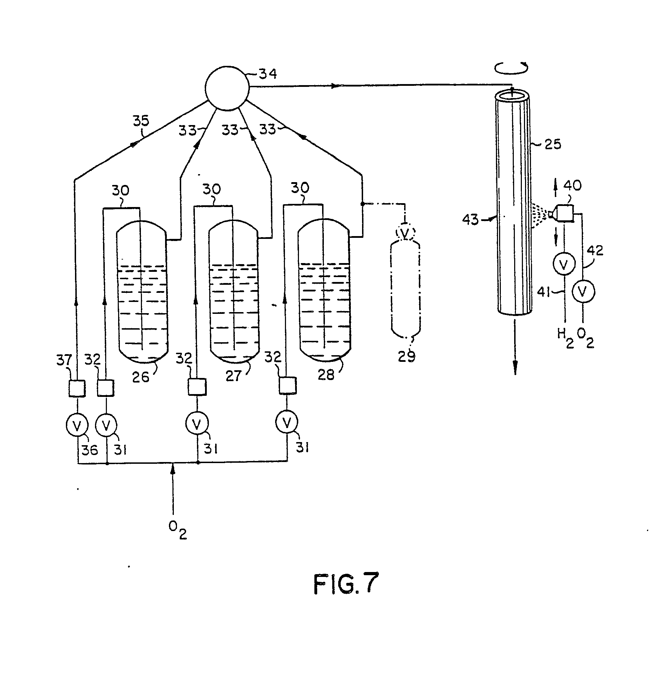

Figure 7 illustrates diagrammatically a form of appartus for producing preforms. The apparatus of Figure 7 produces preforms by the so-called modified chemical vapour deposition method (MCVD), as described in United States patent no. 4,217,027. A tube of fused silica 25 is mounted for rotation about a vertical, or horizontal, axis. Raw materials in liquid form are stored in reservoirs, for example $SiCl_4$ in reservoir 26 and, $GeCl_4$ in reservoir 27 and, if desired, other additives or dopants in reservoirs 28. Any additive or dopant necessarily in gaseous form can be supplied from a cylinder 29. Oxygen is fed through pipes 30, controlled by valves 31 and passing through flowmeters 32, to bubble through the reservoirs, as desired. From the reservoirs the oxygen and vapours pass via pipes 33 to a mixing chamber 34. A direct flow of oxygen also flows to the mixing chamber 34 via a pipe 35, control valve 36 and flow meter 37. From the mixing chamber 34, the mixed gases and vapours pass, via pipe 38, to one end of the tube 25. The tube is rotated about its longitudinal axis and the mixed gases and vapours flow through the tube. A burner 40 is traversed along the tube 25, the burner fed with hydrogen and oxygen via pipes 41 and 42.

At the heated position in the tube, indicated at 43, the gases and vapours dissociate and oxidation of the silicon occurs. The majority of the reaction takes place away from the inner wall of the tube, the products of the oxidation, particulate in form, being deposited on the inner wall of the tube. The deposit is then fused to form a glassy layer. Residual gases and vapours pass out of the other end of the tube 25.

In a particular example, a fused silica tube 25 is used. This becomes what is referred to as the cladding layer, 16 in Figure 2. The core is formed of silica progressively doped with germanium the phosphorus level being constant. The germanium increases the RI of the core material and the phosphorus lowers the fusion temperature of the deposited reaction products. To obtain phosphorus, phosphorus oxychloride is provided in reservoir 28. As the burner traverses the tube, the flow of germanium containing vapour to the mixing chamber 34 is slowly increased, in accordance with a desired programme to give a RI profile which approximates to the optimum. However, instead of restricting deposition rates to give a predetermined thickness to each layer, with a large number of layers, to produce small steps in RI increase, the deposition rate is allowed to approach, or be at, the maximum, producing thicker layers. The number of layers, that is the number of passes of the burner, is smaller.

By having a high rate of deposition and fewer layers, or passes, a preform can be produced quicker and cheaper.

After the desired number of layers have been formed, for example fifteen, the flow of oxygen can be shut off and the burner shut off and the preform removed, later being put in a machine for collapsing and drawing to a fiber. Alternatively, the flow of vapours can be shut off by shutting off oxygen flow to reservoirs 26, 27 and 28, but the oxygen flow itself maintained. The temperature of the burner is increased and the burner traversed slowly along the tube to collapse it to a solid preform. The solid preform can then be put in a fiber drawing apparatus for drawing to a fiber, or first positioned in a further fused silica tube which fits closely on the solid preform, the whole then drawn to a fiber.

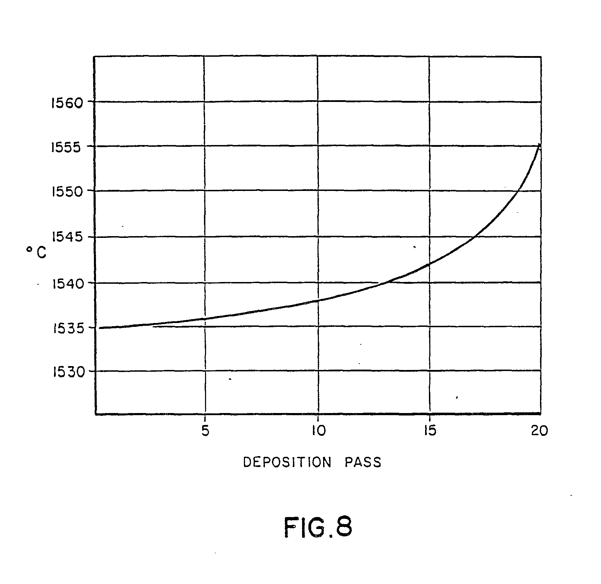

A typical example of the parameters for the process for a graded index fiber, is as follows. The reservoirs 26, 27 and 28 are positioned in a water bath within a cabinet or enclosure to provide a predetermined controllable temperature of the liquids in the reservoirs. In the example, the water bath temperature is approximately 27°C, with the temperature within the cabinet approximately 29°C. The oxygen flow rates through the reservoirs is approximately 360 $cm^3$/min through reservoir 26, $SiCl_4$, and varying from about 26cc/min to about 456 $cm^3$/min through reservoir 27, $GeCl_4$, the lowest value at the start of the process and the highest value at the end. $POCl_3$ is stored in reservoir 28 and the oxygen flow rate through reservoir 28 is about 51 $cm^3$/min. The additional flow of oxygen, via pipe 35 in Figure 7, is about 160 $cm^3$/min. The water bath temperature and oxygen flow rates are such as to give the desired amounts of the various materials in the mixing chamber 34 and thus into the tube 25. With the above values, the burner 40 is traversed twenty times. With a tube 25 of 16 mm internal diameter and 18 mm external diameter, and with a temperature at the hot zone inside the tube as in Figure 8, a fused thickness of about 0.53 mm is obtained on the inner wall of the tube. The tube and deposit is collapsed by two passes of the burner, at a temperature of about 2000°C, to give a rod of about 10 mm outside diameter. The flow of oxygen only is maintained during collapse. The rod is then inserted into a pure fused silica tube 16 mm outside diameter and 12 mm inside diameter and the whole assembly drawn to a fiber.

A cleaning pass may be made at the beginning of the deposit process. The temperature of the water bath and oxygen flow rates can be varied to vary deposition rate. Substantially the same thickness of deposit has been obtained with fifteen passes of the burner, with increased oxygen flows and slight increase in water bath temperature. The water bath temperature and oxygen flows can be varied independently.

As seen in Figure 8, the temperature within the tube 25, at the hot zone, is increased during deposition. Again, Figure 8 is a typical example, and the actual temperature at the hot zone need not follow the curve of Figure 8. There may be slight variations in the temperature and the variation can be different.

The actual number of passes of the burner, that is the number of layers deposited, can vary. In conventional processes forty or more layers are formed, or deposited. With the present invention, twenty layers has been found to give a good optimum in rate of deposition and acceptable characteristics. Fifteen layers has been found to be acceptable, and twenty five and thirty layers also. However at thirty layers, and above, the advantage of high deposition rate is decreasing rapidly and the lower deposition rates of conventional processes are approached without the particular advantages which can be obtained with a large number of thin layers. Therefore the present invention is concerned with conventional total deposition thickness with less than about thirty layers.

To form an individual cable length a plurality of fibers are assembled together. In one example, the fibers are positioned in circumferentially spaced grooves in a flexible, usually plastic, cylindrical support manner. Another form of cable length has the fibers positioned side-by-side, in a spaced apart relationship, to form a ribbon. Cable lengths are then joined together, by fusion splicing of the fibers for example, to form a transmission line or link. Various other forms of cable exist.

## Claims

1. An optical transmission line comprising a plurality of optical fiber lengths which are spliced together, each optical fiber length having a graded index core (15) composed of a plurality of layers of doped fused silica, the refractive index of each individual layer being substantially uniform, the refractive index of the layers increasing from the outer layer towards the center of the core, the radial profile (18) of the refractive index of the core being of stepped form, the mean refractive index profile being near-parabolic, the transmission line characterized in that the profile (18) departs significantly from a smooth profile, the core (15) consisting of less than thirty layers deposited in successive deposition steps, the individual optical fiber lengths being produced from optical fiber preforms.

2. An optical fiber as claimed in claim 1, further characterized in that the transmission line has a cladding layer (16) of fused silica.

3. A method of making an optical transmission line comprising forming a plurality of layers of doped fused silica on an inside wall of a fused silica tubular preform the refractive index of the layers increasing from the outer layer towards the inner layer, the refractive index profile (18) through the deposited layers being of stepped form, the refractive index of individual layers being substantially uniform, the method further comprising mounting the tubular preform in a vertical orientation, heating the tube to collapse the tube, subsequently drawing fiber from the collapsed tube, the fiber having a correspondingly stepped refractive index core, the mean refractive index profile being near-parabolic, the method characterized by forming less than thirty layers on the preform inside wall whereby the profile (18) departs significantly from a smooth profile, and splicing together several lengths of fiber.

## Patentansprüche

1. Optische Übertragungsleitung, bestehend aus einer Vielzahl von optischen Faserlängen, die miteinander verspleißt sind, wobei jede optische Faserlänge einen aus einer Vielzahl von Schichten aus dotiertem Quarzglas zusammengesetzten Kern (15) mit gestuftem Index besitzt, wobei der Brechungsindex jeder Einzelschicht im wesentlichen gleichmäßig ist, der Brechungsindex der Schichten von der Außenschicht zu dem Zentrum des Kernes hin ansteigt, das Radialprofil (18) des Brechungsindex des Kernes von gestufter Form und das mittlere Brechungsindexprofil nahezu parabolisch ist und die Übertragungsleitung dadurch gekennzeichnet ist, daß das Profil (18) bedeutsam von einem glatt verlaufenden Profil abweicht, der Kern (15) aus weniger als dreißig in aufeinanderfolgenden Ablagerungsschritten abgelagerten Schichten besteht, und die einzelnen optischen Faserlängen aus optischen Faser-Vorformen hergestellt sind.

2. Eine optische Faser nach Anspruch 1, weiter dadurch gekennzeichnet, daß die Übertragungsleitung eine Umkleidungsschicht (16) aus Quarzglas besitzt.

3. Verfahren zur Herstellung einer optischen Übertragungsleitung, die das Ausbilden einer Vielzahl von Schichten aus dotiertem Quarzglas an einer Innenwand einer rohrförmigen Quarzglas-Vorform umfaßt, wobei der Brechungsindex der Schichten von der Außenschicht zu der Innenschicht hin ansteigt, wobei das Brechungsindex-Profil (18) durch die abgelagerten Schichten von gestufter Form ist, der Brechungsindex der Einzelschichten im wesentlichen gleichförmig ist, das Verfahren weiter das Anbringen der rohrförmigen Vorform in vertikaler Ausrichtung, das Aufheizen des Rohres zum Zusammenfallen des Rohres, das darauffolgende Ziehen einer Faser aus dem zusammengefallenen Rohr umfaßt, wobei die Faser einen Kern mit entsprechend gestuftem Brechungsindex besitzt, das mittlere Brechungsindex-Profil nahezu parabolisch ist, und das Verfahren weiter gekennzeichnet wird durch Ausbilden von weniger als dreißig Schichten an der Vorform-Innenwand, wodurch das Profil (18) bedeutsam von einem glatten Profil abweicht, und durch Zusammenspleißen einzelner Faserlängen.

**Revendications**

1. Ligne de transmission optique comprenant une multitude de tronçons de fibre optique qui sont épissurés ensemble, chaque tronçon de fibre optique ayant un noyau (15) à indice graduel constitué d'une pluralité de couches de verre de silice dopé, l'indice de réfraction de chaque couche individuelle étant sensiblement uniforme, l'indice de réfraction des couches augmentant à partir de la couche extérieure dans la direction du centre du noyau, le profil radial (18) de l'indice de réfraction du noyau ayant la forme de gradins, le profil de l'indice de réfraction moyen étant presque parabolique, la ligne de transmission étant caractérisée en ce que le profil (18) s'écarte sensiblement d'un profil régulier, le noyau (15) étant constitué de moins de trente couches déposées par étapes successives de dépôt, les tronçons individuels de fibre optique étant produits à partir de préformes de fibre optique.

2. Fibre optique selon la revendication 1, caractérisée en outre en ce que la ligne de transmission comporte une couche d'habillage (16) en verre de silice.

3. Procédé de fabrication d'une ligne de transmission optique comprenant la formation d'une multitude de couches de verre de silice dopé sur une paroi intérieure d'une préforme tubulaire en verre de silice, l'indice de réfraction des couches augmentant à partir de la couche extérieure dans la direction de la couche intérieure, le profil (18) de l'indice de réfraction des couches déposées ayant la forme de gradins, l'indice de réfraction des couches individuelles étant sensiblement uniforme, le procédé comportant en outre le montage de la préforme tubulaire dans une orientation verticale, le chauffage du tube de manière à en provoquer l'écrasement, l'étirage ultérieur de la fibre à partir du tube écrasé, la fibre ayant un noyau à indice de réfraction présentant à l'avenant des gradins, le profil de l'indice de réfraction moyen étant presque parabolique, le procédé étant caractérisé par la formation de moins de trente couches sur la paroi intérieure de la préforme, d'où il résulte que le profil (18) s'écarte sensiblement d'un profil régulier, et l'épissure de plusieurs tronçons de fibre.

FIG. 1

FIG. 2

FIG. 3

FIG. 4

FIG. 5

FIG. 6

FIG.7

FIG.8